# EUROPÄISCHE PATENTSCHRIFT

(11) **EP 1 633 149 B1**
(45) Veröffentlichungstag und Bekanntmachung des Hinweises auf die Patenterteilung: **08.08.2007**
(21) Anmeldenummer: 04021128.6
(22) Anmeldetag: 06.09.2004
(51) Int. Cl.: H04Q 3/00

(54) **Adaptives Verfahren zur Inbetriebnahme von Links in Kommunikationsnetzen, insbesondere für M2PA-Links**
Adaptive method of operating links in a communication network, in particular M2AP-links
Méthode adaptative pour la mise en service de liaisons dans un réseau de communication, en particulier des liaisons M2AP

(43) Veröffentlichungstag der Anmeldung: 08.03.2006
(73) Patentinhaber: SIEMENS AKTIENGESELLSCHAFT, 80333 München (DE)
(72) Erfinder: Gaiser, Franz, 77704 Oberkirch (DE); Schrüfer, Wolfgang, 85757 Karlsfeld (DE); Schwarzbauer, Hanns Jürgen, Dr., 82194 Gröbenzell (DE)

(56) Entgegenhaltungen:
- UNDERSTANDING THE SIGTRAN PROTOCOL SUITE A TUTORIAL, JIM DARROCH, 6. November 2003 (2003-11-06), Seiten 1-7, XP002312818 INTERNET

## Beschreibung

Die vorliegende Erfindung betrifft ein verbessertes Verfahren und Netzelement zur Inbetriebnahme von Links in Telekommunikationsnetzen. Insbesondere bezieht sich die Erfindung auf die automatische Inbetriebnahme von M2PA-Links in Netzwerkanordnungen, in denen Netzelemente mit verschiedenen Linkinbetriebnahme-Prüfverfahren eingesetzt werden.

Moderne Kommunikationsnetze transportieren üblicherweise zwei Arten von Verkehr bzw. Daten. Die erste Art ist der Verkehr, welcher von Nutzern oder Teilnehmern gesendet oder empfangen wird und dessen Übertragung häufig dem Nutzer oder Teilnehmer in Rechnung gestellt wird. Dieser Verkehr wird auch als Nutzerverkehr, Nutz(er)daten oder Teilnehmerverkehr bezeichnet. Die zweite Art ist jener Verkehr, der durch das Netzwerkmanagement verursacht und häufig als Managementverkehr bezeichnet wird.

Auf dem Gebiet der Telekommunikation wird der Managementverkehr auch als Signalisierungsverkehr bezeichnet. Dabei bezieht sich der Begriff "Signalisierung" auf den Austausch von Signalisierungsnachrichten zwischen verschiedenen Netzelementen wie Datenbankservern, Ortsvermittlungsstellen, Transitvermittlungsstellen und Nutzerendgeräten. Ein weitläufig bekanntes Protokoll zum Übertragen solcher Signalisierungsinformationen ist das Signaling System 7 (SS7), häufig auch als Zentrales Zeichengabesystem Nr. 7 (ZZS7) oder Common Channel Signaling System 7 (CCS7) bezeichnet.

Das Signaling System 7 ist durch die International Telecommunication Union (ITU) in der Standardserie Q.7xx standardisiert und erfüllt alle Signalisierungsanforderungen heutiger Telekommunikationsnetze.

Das Signaling System 7 bildet dabei ein unabhängiges Netzwerk, in welchem SS7-Nachrichten zwischen den Netzelementen über bidirektionale Kanäle ausgetauscht werden, welche als Links bezeichnet werden. Die Signalisierung erfolgt außerhalb des (Sprach-)Bandes (out-of-band) und nicht innerhalb des Bandes (in-band) auf Kanälen, die den Nutz(er)daten (z.B. Sprache) vorbehalten sind. Dies ermöglicht neben einem schnelleren Verbindungsaufbau eine Reihe von Funktionen, beispielsweise Intelligent Network (IN) Dienste, die im Signalisierungsnetz ablaufen können, ohne daß parallele Nutzdatenverbindungen aufgebaut werden müssen.

Die Elemente eines SS7-Netzwerks sind als Signaling Points bekannt, die durch einen Signaling Point Code (SPC) eindeutig identifiziert werden. Diese Point Codes werden in den Signalisierungsnachrichten zwischen Signaling Points übertragen und bezeichnen jeweils die Quelle und das Ziel einer Nachricht. Jeder Signaling Point nutzt eine Routingtabelle zum Auswahl eines geeigneten Signalisierungswegs für jede Nachricht.

Das Signaling System 7 nutzt einen Protokollstack, in welchem die Hardware- und Softwarefunktionen des SS7-Protokolls in funktionale Abstraktionen unterteilt werden, die Levels bzw. Ebenen genannt werden. Diese Levels lassen sich mit einigen Einschränkungen auf das Open Systems Interconnect (OSI) 7-Layer-Modell bzw. Schichtenmodell der International Standards Organization (ISO) abbilden.

Die unteren drei Levels werden Message Transfer Part (MTP) genannt. MTP Level 1 definiert die physikalischen, elektrischen und funktionalen Eigenschaften des digitalen Signaling Link. MTP Level 2 sichert die korrekte Ende-zu-Ende-Übertragung einer Nachricht über einen Signaling Link. MTP Level 3 liefert das Routing von Nachrichten zwischen Signaling Points des SS7-Netzes.

Aktuelle Entwicklungen zielen darauf ab, die auf exklusiven und daher teuren Leitungen basierende Signalisierung durch Dienste, die auf dem Internet Protocol (IP) basieren, zu ersetzen. Wenn jedoch IP an die Stelle des MTP Level 1 tritt, erfordert dies auch einen Austausch des bislang verwendeten MTP Level 2. Hierzu wird von der Internet Engineering Task Force (IETF) das Protokoll MTP2 User Peer-toPeer Adaptation Layer (M2PA), welches auf dem Stream Control Transmission Protocol (SCTP) aufsetzt, vorgeschlagen und standardisiert (Stand der Entwicklungen zum Zeitpunkt der Anmeldung siehe den Internet Draft der IETF mit dem Titel *draft-ietf-sigtran-m2pa-12.txt* vom Juni 2004).

Ziel der Kombination M2PA / SCTP / IP ist es, ein Protokoll zu schaffen, welches - analog dem MTP Level 2 der klassischen SS7-Netze - Nachrichten des MTP Level 3 transportiert und sich dabei aus Sicht des MTP Level 3 auch identisch zu MTP Level 2 verhält.

Problematischerweise gibt es zwei Varianten der Protokollebenen unterhalb des MTP Level 3, die für verschiedene Übertragungsmedien spezifiziert sind: der klassische MTP Level 2 gemäß ITU-T Q.703 für die Übertragung von Signalisierungsnachrichten auf Links mit 64 kbit/s, 1,5 Mbit/s oder 2,0 Mbit/s und den B-ISDN ATM Adaptation Layer gemäß ITU-T Q.21xx, insbesondere Q.2140, für die Übertragung über (schnellere) ATMbasierte Links.

Beide Varianten unterscheiden sich hinsichtlich des Link-Alignments. Während gemäß Q.703 eine Übertragung von Prüfnachrichten vor der Aktivierung eines Links gefordert wird, können gemäß Q.2140 diese Prüfnachrichten entfallen.

Damit ein M2PA-Link aktiviert werden kann, muß auf beiden Seiten des Links das gleiche Prüfverfahren eingestellt sein. Diese Einstellung kann bislang nur manuell durch den Betreiber der beiden Endpunkte des Links vorgenommen werden. Neben des an sich teuren manuellen Eingriffs muß auch noch eine Datenbank verwaltet und gepflegt werden, in der für jeden Link im Kommunikationsnetz vermerkt ist, welches Prüfverfahren durch die an diesen Link angeschlossenen Netzelemente angewendet wird.

Eine Aufgabe der vorliegenden Erfindung besteht daher darin, ein Verfahren und ein Netzelement anzugeben, die eine automatische Inbetriebnahme eines M2PA-Links unabhängig von den in den am Link angeschlossenen Netzelementen verwendeten Prüfverfahrens ermöglichen.

Diese Aufgabe wird gelöst durch ein Verfahren zur Inbetriebnahme eines Links zwischen einem lokalen Netzelement und einem entfernten Netzelement eines Kommunikationsnetzes, wobei im Kommunikationsnetz die Inbetriebnahme von Links mit und ohne Linkprüfung zulässig ist und wobei das Verfahren mit folgenden Schritten zumindest im lokalen Netzelement abläuft:
a) Senden zumindest einer Inbetriebnahme-Bereitschaftsnachricht bei Vorliegen der lokalen Voraussetzungen für die Inbetriebnahme des Links;
b) Empfangen einer Inbetriebnahme-Bereitschaftsnachricht oder einer Linkprüfungs-Anforderungsnachricht oder einer Linkbereitschaftsnachricht;
c) Senden einer weiteren Inbetriebnahme-Bereitschaftsnachricht sowie einer Linkprüfungs-Anforderungsnachricht und erneutes Empfangen einer Linkprüfungs-Anforderungsnachricht oder einer Linkbereitschaftsnachricht, falls eine Inbetriebnahme-Bereitschaftsnachricht empfangen wurde;
d) Senden einer Linkbereitschaftsnachricht und Inbetriebnahme des Links, falls eine Linkbereitschaftsnachricht empfangen wurde; anderenfalls
e) falls eine lokale Voreinstellung keine Linkprüfung erfordert: Senden einer Linkprüfungs-Anforderungsnachricht und einer Linkbereitschaftsnachricht und Inbetriebnahme des Links unmittelbar nach Empfang einer Linkbereitschaftsnachricht, falls eine Linkprüfungs-Anforderungsnachricht empfangen wurde, wobei die Linkprüfungs-Anforderungsnachricht in Schritt e) nicht gesendet wird, wenn diese bereits in Schritt c) gesendet wurde; anderenfalls
f) falls die lokale Voreinstellung eine Linkprüfung erfordert: Senden einer Linkprüfungs-Anforderungsnachricht und Durchführen der Linkprüfung mit anschließender Inbetriebnahme des Links, falls eine Linkprüfungs-Anforderungsnachricht empfangen wurde.

Die Erfindung betrifft ferner ein Netzelement mit Mitteln zur Ausführung dieses Verfahrens.

Vorteilhafte Ausgestaltungen der Erfindung sind in den Unteransprüchen angegeben.

Vorteilhaft wird durch die Erfindung die automatische Linkinbetriebnahme zwischen Netzelementen ermöglicht, die verschiedene Inbetriebnahme-Modi fordern bzw. unterstützen:
a) Netzelemente, welche die Prüfung ("Proving") gemäß Q.703 erfordern (auch als Strict Proving bezeichnet)
b) Netzelemente, keine Prüfung gemäß Q.2140 erwarten (auch als Strict without Proving bezeichnet)
c) Netzelemente, die das erfindungsgemäße adaptive Verfahren anwenden und dabei als Voreinstellung eine Prüfung anstreben für den Fall, daß die Gegenstelle ebenfalls das adaptive Verfahren unterstützt (auch als Adaptive with Proving bezeichnet)
d) Netzelemente, die das erfindungsgemäße adaptive Verfahren anwenden und dabei als Voreinstellung das Auslassen der Prüfung anstreben für den Fall, daß die Gegenstelle ebenfalls das adaptive Verfahren unterstützt (auch als Adaptive without Proving bezeichnet).

Die Notwendigkeit des aufwendigen manuellen Einstellens der benachbarten Netzelemente eines Links entfällt, da die vorliegende Erfindung automatisch das für den jeweiligen Partner a-d geeignete Linkinbetriebnahmeverfahren anwendet. Mit der vorliegenden Erfindung wird es somit für M2PA und andere Protokolle möglich, verschiedene Linkinbetriebnahmeverfahren zu unterstützen, ohne daß Änderungen an den bislang installierten Systemen vorgenommen werden müssen.

Dabei erfüllt die Erfindung die IETF Spezifikation für M2PA und ermöglicht eine Linkinbetriebnahme bzw. Linkaktivierung mit allen Partnerverfahren, und zwar unabhängig, davon welche Seite mit der Aktivierung beginnt. Ferner werden das "Emergency"-Alignment-Verfahren und das "normale" Alignment-Verfahren unterstützt, die sich hauptsächlich in der Zeitdauer der Proving-Periode bei Linkinbetriebnahme unterscheiden.

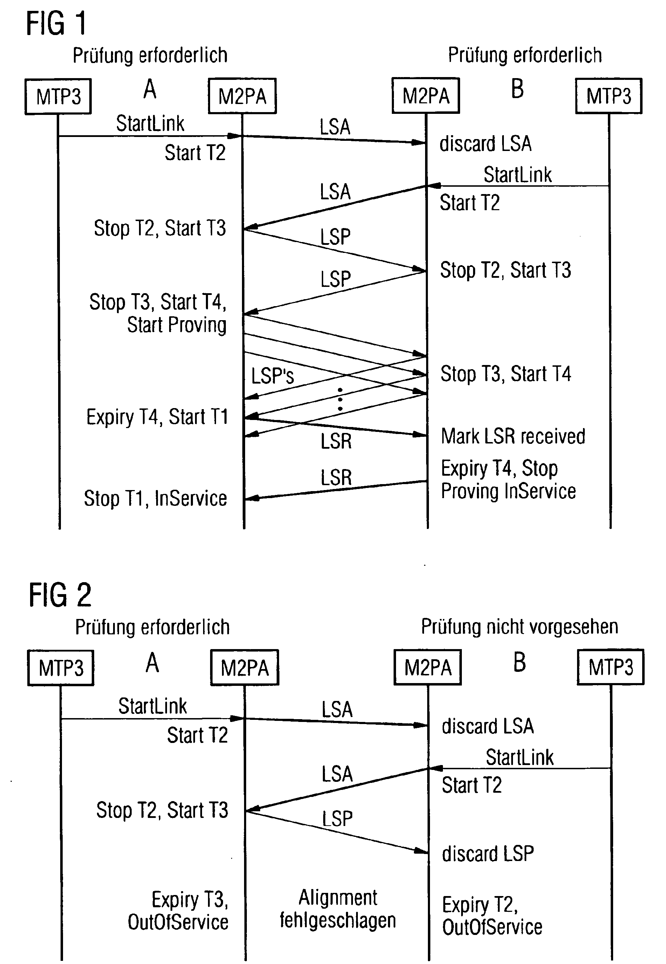

Im folgenden werden Ausführungsbeispiele der vorliegenden Erfindung im Zusammenhang mit 16 Figuren näher erläutert. Figuren 1-16 zeigen Nachrichtenabfolgediagramme für die Inbetriebnahme von Links zwischen Netzelementen, die verschiedene Inbetriebnahme-Modi fordern bzw. unterstützen. Die folgende Aufstellung gibt eine Übersicht:
Fig. 1: Linkinbetriebnahme zwischen einem Netzelement, das die Link-Prüfung nach Q.703 erfordert und einem weiteren Netzelement, das die Link-Prüfung nach Q.703 erfordert.
Fig. 2: Fehlgeschlagene Linkinbetriebnahme zwischen einem Netzelement, das die Link-Prüfung nach Q.703 erfordert und einem Netzelement, das die Link-Prüfung nach Q.2140 abweist.
Fig. 3: Linkinbetriebnahme zwischen einem Netzelement, das die Link-Prüfung nach Q.703 erfordert und einem Netzelement, welches das erfindungsgemäße adaptive Verfahren unterstützt und als Voreinstellung die Prüfung nach Q.703 anstrebt.
Fig. 4: Linkinbetriebnahme zwischen einem Netzelement, das die Link-Prüfung nach Q.703 erfordert und einem Netzelement, welches das erfindungsgemäße adaptive Verfahren unterstützt und als Voreinstellung das Auslassen der Prüfung nach Q.2140 anstrebt.
Fig. 5: Fehlgeschlagene Linkinbetriebnahme zwischen einem Netzelement, das die Link-Prüfung nach Q.2140 abweist und einem Netzelement, das die Link-Prüfung nach Q.703 erfordert.
Fig. 6: Linkinbetriebnahme zwischen einem Netzelement, das die Link-Prüfung nach Q.2140 abweist und einem weiteren Netzelement, das die Link-Prüfung nach Q.2140 abweist.
Fig. 7: Linkinbetriebnahme zwischen einem Netzelement, das die Link-Prüfung nach Q.2140 abweist und einem Netzelement, welches das erfindungsgemäße adaptive Verfahren unterstützt und als Voreinstellung die Prüfung nach Q.703 anstrebt.
Fig. 8: Linkinbetriebnahme zwischen einem Netzelement, das die Link-Prüfung nach Q.2140 abweist und einem Netzelement, welches das erfindungsgemäße adaptive Verfahren unterstützt und als Voreinstellung das Auslassen der Prüfung nach Q.2140 anstrebt.
Fig. 9: Linkinbetriebnahme zwischen einem Netzelement, welches das erfindungsgemäße adaptive Verfahren unterstützt und als Voreinstellung die Prüfung nach Q.703 anstrebt und einem Netzelement, das die Link-Prüfung nach Q.703 erfordert.
Fig. 10: Linkinbetriebnahme zwischen einem Netzelement, welches das erfindungsgemäße adaptive Verfahren unterstützt und als Voreinstellung die Prüfung nach Q.703 anstrebt und einem Netzelement, das die Link-Prüfung nach Q.2140 abweist.
Fig. 11: Linkinbetriebnahme zwischen einem Netzelement, welches das erfindungsgemäße adaptive Verfahren unterstützt und als Voreinstellung die Prüfung nach Q.703 anstrebt und einem weiteren Netzelement, welches das erfindungsgemäße adaptive Verfahren unterstützt und als Voreinstellung die Prüfung nach Q.703 anstrebt.
Fig. 12: Linkinbetriebnahme zwischen einem Netzelement, welches das erfindungsgemäße adaptive Verfahren unterstützt und als Voreinstellung die Prüfung nach Q.703 anstrebt und einem Netzelement, welches das erfindungsgemäße adaptive Verfahren unterstützt und als Voreinstellung das Auslassen der Prüfung nach Q.2140 anstrebt.
Fig. 13: Linkinbetriebnahme zwischen einem Netzelement, welches das erfindungsgemäße adaptive Verfahren unterstützt und als Voreinstellung das Auslassen der Prüfung nach Q.2140 anstrebt und einem Netzelement, das die Link-Prüfung nach Q.703 erfordert.
Fig. 14: Linkinbetriebnahme zwischen einem Netzelement, welches das erfindungsgemäße adaptive Verfahren unterstützt und als Voreinstellung das Auslassen der Prüfung nach Q.2140 anstrebt und einem Netzelement, das die Link-Prüfung nach Q.2140 abweist.
Fig. 15: Linkinbetriebnahme zwischen einem Netzelement, welches das erfindungsgemäße adaptive Verfahren unterstützt und als Voreinstellung das Auslassen der Prüfung nach Q.2140 anstrebt und einem Netzelement, welches das erfindungsgemäße adaptive Verfahren unterstützt und als Voreinstellung die Prüfung nach Q.703 anstrebt.
Fig. 16: Linkinbetriebnahme zwischen einem Netzelement, welches das erfindungsgemäße adaptive Verfahren unterstützt und als Voreinstellung das Auslassen der Prüfung nach Q.2140 anstrebt und einem weiteren Netzelement, welches das erfindungsgemäße adaptive Verfahren unterstützt und als Voreinstellung das Auslassen der Prüfung nach Q.2140 anstrebt.

Mit Bezug auf Fig. 1, 2, 5 und 6 werden im folgenden kurz die Abläufe erläutert, die bei der Linkinbetriebnahme zwischen Netzelementen A und B des Standes der Technik ablaufen, weelche nur die Verfahren nach Q.703 oder Q.2140 unterstützen.

Grundsätzlich gilt für die nachfolgenden Ausführungen folgendes: T1, T2, T3 und T4 bezeichnen Timer, die in dem o.g. Internet-Draft der IETF oder in mit diesem Draft in Zusammenhang stehenden Dokumenten definiert werden und bestimmte Phasen bei der Linkinbetriebnahme überwachen. Wenn die internen Voraussetzungen in einem Netzelement vorliegen, kann die Inbetriebnahme eines Links beginnen, angezeigt durch das Aussenden einer Inbetriebnahme-Bereitschaftsnachricht. Für das bevorzugte Ausführungsbeispiel, in dem M2PA als Linkprotokoll verwendet wird, ist dies eine Nachricht vom Typ Link Status: Alignment (LSA). Zu den Voraussetzungen gehört beispielsweise, daß die involvierte Hardware fehlerfrei arbeitet bzw. vorhandene Fehler durch Hardware oder Software korrigiert sind, daß die Hardware und/oder die Software nicht administrativ deaktiviert oder blockiert sind und daß der MTP Level 3, abgekürzt MTP3, die Linkinbetriebnahme anfordert (dargestellt durch die "StartLink" Anweisung von MTP3 an M2PA).

Liegen für ein Netzelement diese Voraussetzungen nicht vor, werden sämtliche empfangenen Nachrichten verworfen, angedeutet durch "discard LSA" beim Netzelement B beim Empfang der ersten Nachricht LSA, die vor der "StartLink" Anweisung des MTP3 bei B liegt.

Die weiteren Nachrichten sind die die Linkprüfungs-Anforderungsnachricht (für M2PA die Nachricht Link Status: Proving (LSP), die sowohl für das normale Proving als auch für das Emergency Proving verwendet wird) und die Linkbereitschaftsnachricht (für M2PA die Nachricht Link Status: Ready (LSR)).

Schließlich wird bei der folgenden Beschreibung davon ausgegangen, daß A bereits zur Linkinbetriebnahme bereit ist und B in diese Bereitschaft versetzt wird, so daß die erste betrachtete Nachricht die LSA von B zu A ist.

In Fig. 1 erfolgt die Linkinbetriebnahme zwischen einem Netzelement A, das die Link-Prüfung nach Q.703 erfordert und einem weiteren Netzelement B, das die Link-Prüfung nach Q.703 erfordert. B sendet an A eine LSA, woraufhin A eine LSP an B sendet und damit die Prüfung ("Proving") anfordert. Dies stimmt mit den lokalen Einstellungen bei B überein, und B sendet ebenfalls eine LSP. Daraufhin beginnt die Proving-Periode, innerhalb derer Nachrichten über den in Betrieb zu nehmenden Link ausgetauscht werden, um die Fehlerfreiheit des Links zu überprüfen. Diese Proving-Periode wird durch Timer überwacht, hier T4. Nach erfolgreicher Proving-Periode werden LSR ausgetauscht, und der Link geht in Betrieb und kann für den Transport von MTP Level 3 Nachrichten genutzt werden.

Auf diese Basismechanismen wird hier nicht näher eingegangen, da sie in den oben genannten Standards bzw. Standard-Drafts detailliert beschrieben und dem Fachmann auf dem Gebiet der unteren SS7-Protokollschichten wohlbekannt sind.

Fig. 2 zeigt eine fehlgeschlagene Linkinbetriebnahme zwischen einem Netzelement A, das die Link-Prüfung nach Q.703 erfordert und einem Netzelement B, das die Link-Prüfung nach Q.2140 abweist. Diese Inbetriebnahme schlägt deswegen fehl, da B mit der Nachricht LSP eine unerwartete Nachricht empfängt und diese verwirft, denn B erwartet hier das Auslassen des Proving und daher anstelle der LSP eine LSR.

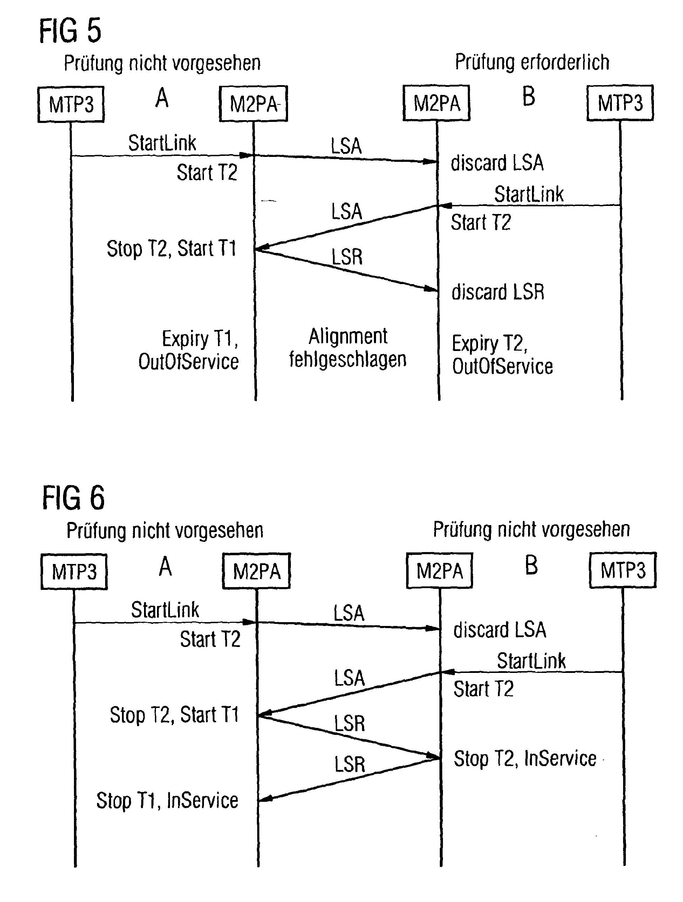

Fig. 5 zeigt den zu Fig. 2 umgekehrten Fall der fehlgeschlagenen Linkinbetriebnahme zwischen einem Netzelement A, das die Link-Prüfung nach Q.2140 abweist und einem Netzelement B, das die Link-Prüfung nach Q.703 erfordert. Diese Inbetriebnahme schlägt deswegen fehl, da B mit der Nachricht LSR eine unerwartete Nachricht empfängt und diese verwirft, denn B erwartet hier das Proving und daher anstelle der LSR eine LSP.

Fig. 6 schließlich zeigt die erfolgreiche Linkinbetriebnahme zwischen einem Netzelement A, das die Link-Prüfung nach Q.2140 abweist und einem weiteren Netzelement B, das die Link-Prüfung nach Q.2140 abweist. Der Ablauf entspricht dem im Zusammenhang mit Fig. 1 beschriebenen, mit dem Unterschied, daß die Proving Periode entfällt und anstelle des Austauschs von LSP sofort LSR zur Linkinbetriebnahme ausgetauscht werden.

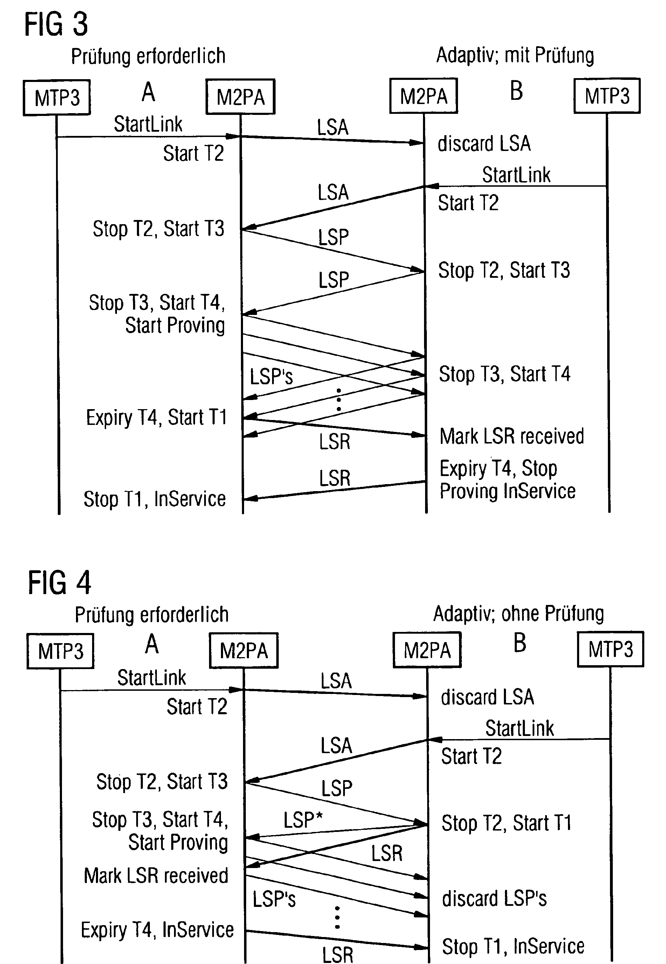

Fig. 3, 4, 7 und 8 zeigen das Zusammenwirken von Netzelementen A, die das erfindungsgemäße adaptive Verfahren nicht unterstützen, mit Netzelementen B, die das erfindungsgemäße adaptive Verfahren unterstützen. Dabei wird die Inbetriebnahme des Links von den das adaptive Verfahren unterstützenden Netzelementen B initiiert, jeweils durch Aussenden einer LSA.

In Fig. 3 erfolgt die Linkinbetriebnahme zwischen einem Netzelement A, das die Link-Prüfung nach Q.703 erfordert und einem Netzelement B, welches das erfindungsgemäße adaptive Verfahren unterstützt und als Voreinstellung die Prüfung nach Q.703 anstrebt. Netzelement B sendet zunächst eine LSA und erhält als Antwort darauf eine LSP, erkennt daraus die Forderung des Netzelementes A nach Prüfung gemäß Q.703 und beantwortet die LSP wiederum mit einer LSP. Da B in diesem Fall selbst die Prüfung anstrebt, wird der mögliche Abbruch des Proving mit sofortiger Inbetriebnahme des Links (siehe Ausführungen zu Fig. 4) hier nicht von B vorgeschlagen. Vielmehr wird das Proving-Verfahren durchgeführt, an dessen Ende bei Fehlerfreiheit der Link in Betrieb genommen wird.

In Fig. 4 erfolgt die Linkinbetriebnahme zwischen einem Netzelement A, das die Link-Prüfung nach Q.703 erfordert und einem Netzelement B, welches das erfindungsgemäße adaptive Verfahren unterstützt und als Voreinstellung das Auslassen der Prüfung nach Q.2140 anstrebt. Wiederum sendet Netzelement B zunächst eine LSA und erhält als Antwort darauf eine LSP, erkennt daraus die Forderung des Netzelementes A nach Prüfung gemäß Q.703 und beantwortet die LSP wiederum mit einer LSP. Da B jedoch in diesem Fall die Prüfung nicht anstrebt, wird der mögliche Abbruch des Proving mit sofortiger Inbetriebnahme des Links (siehe Ausführungen zu Fig. 4) durch Senden einer LSR vorgeschlagen, und die eingehenden LSP-Nachrichten werden verworfen oder in einer Alternative geprüft. A führt das Proving-Verfahren durch, an dessen Ende der Link in Betrieb genommen wird.

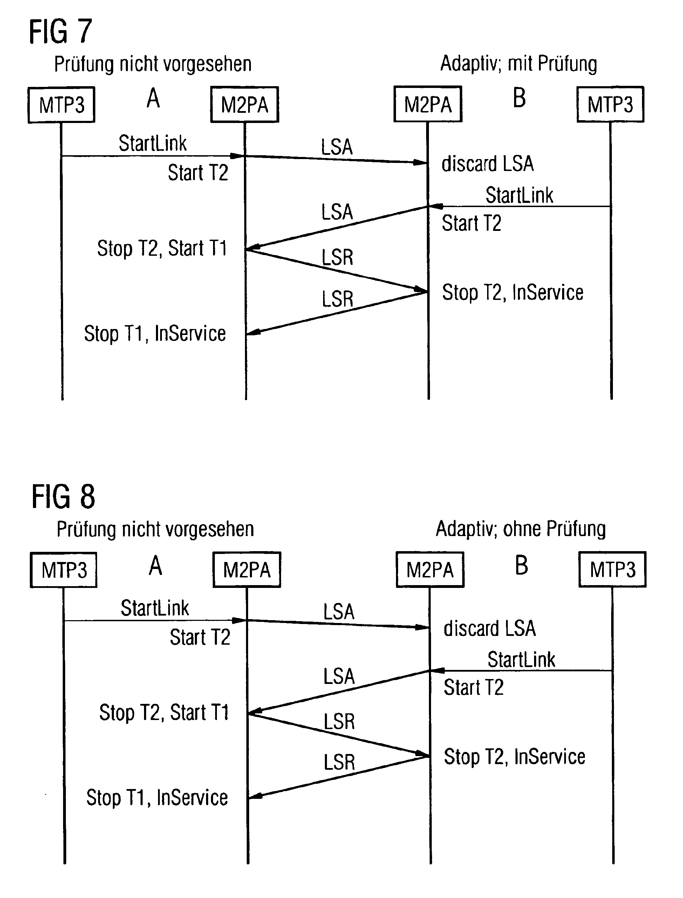

Fig. 7 zeigt die Linkinbetriebnahme zwischen einem Netzelement A, das die Link-Prüfung nach Q.2140 abweist und einem Netzelement B, welches das erfindungsgemäße adaptive Verfahren unterstützt und als Voreinstellung die Prüfung nach Q.703 anstrebt. Netzelement B sendet zunächst eine LSA und erhält als Antwort darauf eine LSR, erkennt daraus die Forderung des Netzelementes A nach Auslassen der Prüfung und beantwortet die LSR wiederum mit einer LSR. Der Link wird unmittelbar in Betrieb genommen.

Der Ablauf ist für die Situation aus Fig. 8 identisch, in der eine Linkinbetriebnahme erfolgt zwischen einem Netzelement, das die Link-Prüfung nach Q.2140 abweist und einem Netzelement, welches das erfindungsgemäße adaptive Verfahren unterstützt und als Voreinstellung das Auslassen der Prüfung nach Q.2140 anstrebt. B erkennt unmittelbar, daß A nur das Verfahren ohne Prüfung unterstützt und schlägt daher das Proving-Verfahren nicht vor.

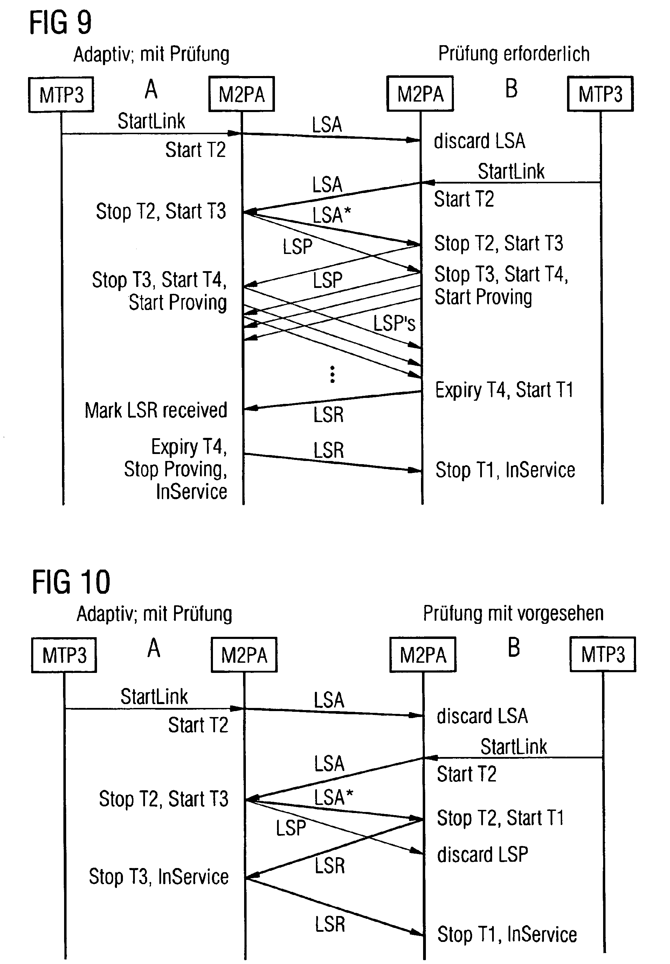

Fig. 9, 10, 13 und 14 zeigen das Zusammenwirken von Netzelementen A, die das erfindungsgemäße adaptive Verfahren unterstützen mit Netzelementen B, die das erfindungsgemäße adaptive Verfahren nicht unterstützen. Dabei wird die Inbetriebnahme des Links von den das adaptive Verfahren nicht unterstützenden Netzelementen B initiiert, jeweils durch Aussenden einer LSA.

Fig. 9 zeigt die Linkinbetriebnahme zwischen einem Netzelement A, welches das erfindungsgemäße adaptive Verfahren unterstützt und als Voreinstellung die Prüfung nach Q.703 anstrebt und einem Netzelement B, das die Link-Prüfung nach Q.703 erfordert. A empfängt die LSA, mit der B die Inbetriebnahme beginnt, und sendet eine zusätzliche Nachricht LSA*, um zu ermitteln, welches Verfahren B anstrebt. Gleichzeitig oder mit nur geringer Verzögerung sendet A eine LSP aus, um zu ermöglichen, daß B mit der Prüfung beginnen kann, falls erforderlich. Dies ist hier der Fall; die Proving Periode beginnt und wird durchgeführt. Anschließend wird der Link durch Austausch von LSR in Betrieb genommen.

Fig. 10 zeigt die Linkinbetriebnahme zwischen einem Netzelement A, welches das erfindungsgemäße adaptive Verfahren unterstützt und als Voreinstellung die Prüfung nach Q.703 anstrebt und einem Netzelement B, das die Link-Prüfung nach Q.2140 abweist. Wiederum empfängt A die LSA, mit der B die Inbetriebnahme beginnt, und sendet eine zusätzliche Nachricht LSA*, um zu ermitteln, welches Verfahren B anstrebt. Gleichzeitig oder mit nur geringer Verzögerung sendet A eine LSP aus, um zu ermöglichen, daß B mit der Prüfung beginnen kann, falls erforderlich. Dies ist hier nicht der Fall; A erkennt durch den Empfang der LSR, die von B unmittelbar nach der LSA* gesendet wird, daß kein Proving erfolgen soll, und der Link wird unmittelbar in Betrieb genommen.

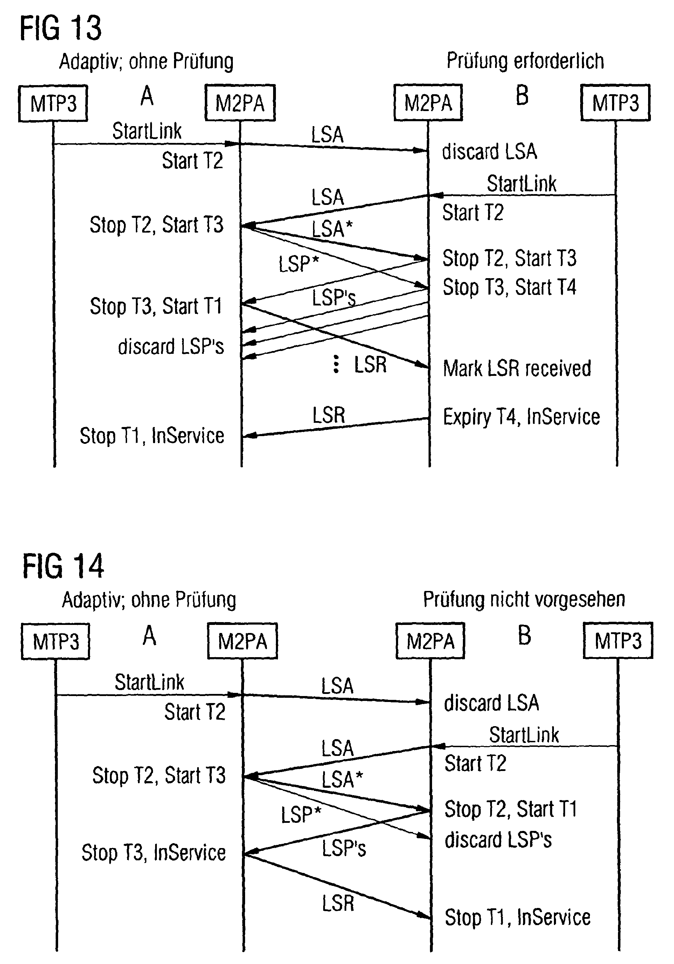

Fig. 13 und 14 zeigen die gleichen Situationen wie Fig. 9 und 10 mit dem Unterschied, daß das Netzelement A hier als Voreinstellung das Auslassen der Prüfung nach Q.2140 anstrebt. Die von A ausgesandte Nachricht LSP ist hier nur vorsorglich für Gegenstellen, für welche die Prüfung obligatorisch ist und deshalb mit LSP* gekennzeichnet. Wie bereits in Fig. 9 und 10 bestimmen die nicht-adaptiven Netzelemente den Ablauf der Inbetriebnahme des Links.

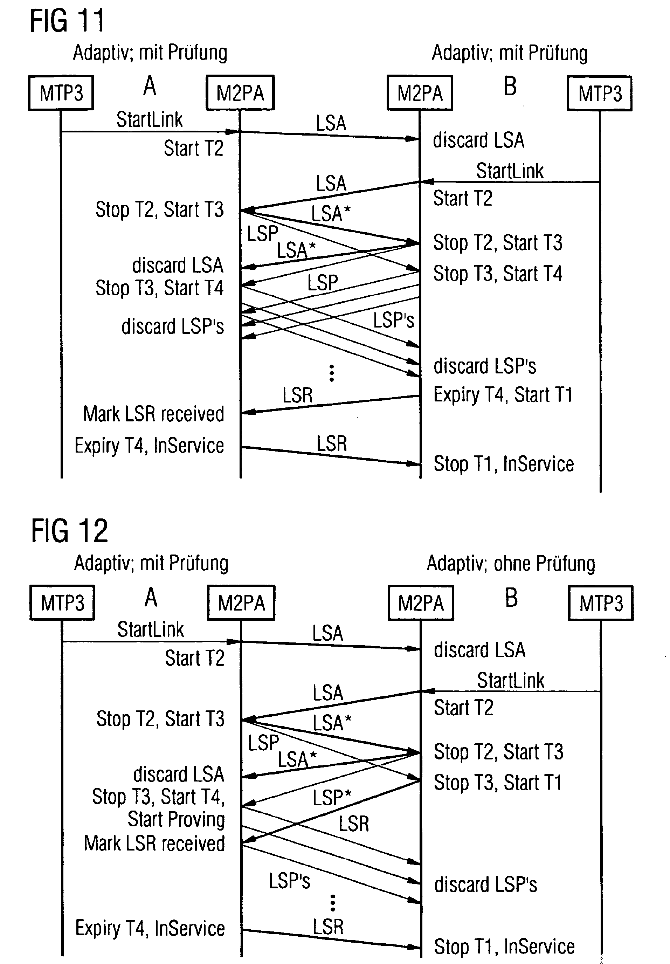

Fig. 11, 12, 15 und 16 schließlich zeigen das Zusammenwirken von Netzelementen A und B, die jeweils das erfindungsgemäße adaptive Verfahren unterstützen.

In Fig. 11 erfolgt die Linkinbetriebnahme zwischen einem Netzelement A, welches das erfindungsgemäße adaptive Verfahren unterstützt und als Voreinstellung die Prüfung nach Q.703 anstrebt und einem weiteren Netzelement B, welches das erfindungsgemäße adaptive Verfahren unterstützt und als Voreinstellung die Prüfung nach Q.703 anstrebt. B sendet eine LSA, die von A mit einer LSA* und einer LSP beantwortet wird. B sendet ebenfalls eine LSA*, die von A verworfen wird, und eine LSP, die für A die Proving Periode in Gang setzt. Nach Ablauf der Proving Periode wird der Link in Betrieb genommen.

Fig. 12 zeigt die Linkinbetriebnahme zwischen einem Netzelement A, welches das erfindungsgemäße adaptive Verfahren unterstützt und als Voreinstellung die Prüfung nach Q.703 anstrebt und einem Netzelement B, welches das erfindungsgemäße adaptive Verfahren unterstützt und als Voreinstellung das Auslassen der Prüfung nach Q.2140 anstrebt. B sendet eine LSA, die von A mit einer LSA* und einer LSP beantwortet wird. B sendet ebenfalls eine LSA*, die von A verworfen wird, und eine vorsorgliche LSP*, die für A die Proving Periode in Gang setzt, sowie eine LSR, um anzuzeigen, daß B keine Proving Periode benötigt. A führt das Proving durch, nach dessen Ablauf der Link in Betrieb genommen wird.

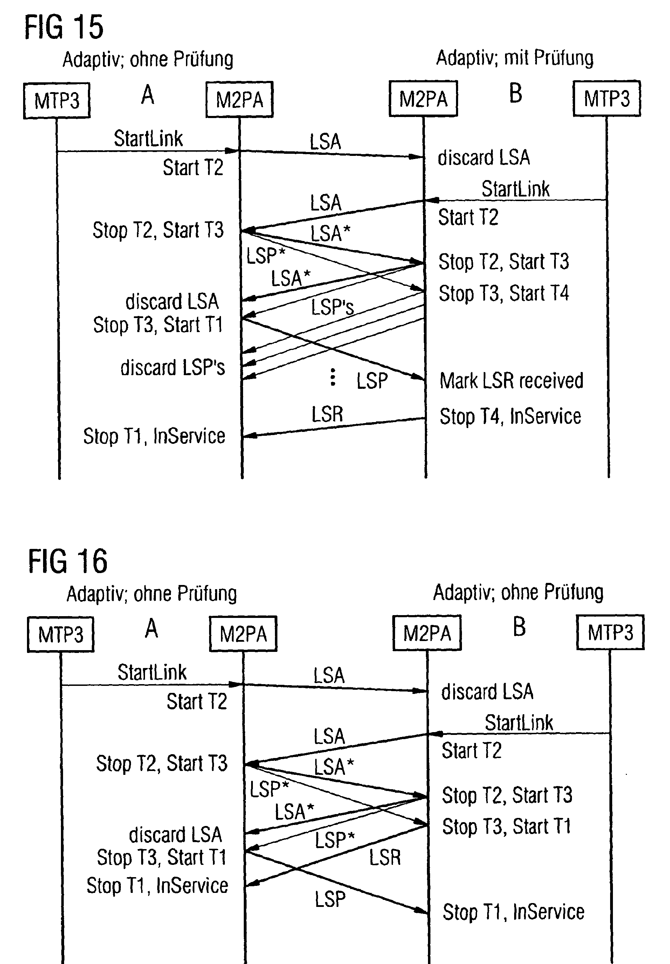

Fig. 15 zeigt die Linkinbetriebnahme zwischen einem Netzelement A, welches das erfindungsgemäße adaptive Verfahren unterstützt und als Voreinstellung das Auslassen der Prüfung nach Q.2140 anstrebt und einem Netzelement B, welches das erfindungsgemäße adaptive Verfahren unterstützt und als Voreinstellung die Prüfung nach Q.703 anstrebt. B sendet eine LSA, die von A mit einer LSA* und einer vorsorglichen LSP* beantwortet wird. B sendet ebenfalls eine LSA*, die von A verworfen wird, und eine LSP, woraufhin A eine LSR sendet, um mitzuteilen, daß für A das Proving nicht notwendig ist. Für B hingegen ist das Proving notwendig, welches mit dem Empfang der vorsorglichen LSP* von A beginnt. B führt das Proving durch, nach dessen Ablauf der Link in Betrieb genommen wird.

Fig. 16 zeigt die Linkinbetriebnahme zwischen zwei Netzelementen A und B, welche das erfindungsgemäße adaptive Verfahren unterstützen und als Voreinstellung das Auslassen der Prüfung nach Q.2140 anstreben. B sendet eine LSA, die von A mit einer LSA* und einer vorsorglichen LSP* beantwortet wird. B sendet ebenfalls eine LSA*, die von A verworfen wird, und eine LSP*, woraufhin A eine LSR sendet, um mitzuteilen, daß für A das Proving nicht notwendig ist. Für B ist das Proving ebenfalls nicht notwendig, weswegen B ebenfalls eine LSR sendet (als Antwort auf die vorsorgliche LSP* von A). Nach Empfang der LSR-Nachrichten wird der Link in Betrieb genommen.

Es sei darauf hingewiesen, daß es sich bei den mit * gekennzeichneten Nachrichten (LSA*, LSP*) um gewöhnliche Nachrichten (LSA, LSP) handelt, die sich dadurch vom standardisierten Ablauf unterscheiden, daß sie zusätzlich gesendet werden.

Obgleich die Erfindung vorstehend mit Bezug auf das Protokoll M2PA beschrieben wurde, ist die Erfindung nicht auf diese Anwendung beschränkt. Vielmehr kann die Erfindung stets dann vorteilhaft angewendet werden, wenn in einem Kommunikationsnetz Elemente vorhanden sind, die ein bestimmtes Prüfverfahren entweder explizit erfordern oder explizit ausschließen - die vorliegende Erfindung paßt sich diesem Verhalten adaptiv an.

## Patentansprüche

1. Verfahren zur Inbetriebnahme eines Links zwischen einem lokalen Netzelement und einem entfernten Netzelement eines Kommunikationsnetzes, wobei im Kommunikationsnetz die Inbetriebnahme von Links mit und ohne Linkprüfung zulässig ist und wobei das Verfahren mit folgenden Schritten zumindest im lokalen Netzelement abläuft:
a) Senden zumindest einer Inbetriebnahme-Bereitschaftsnachricht bei Vorliegen der lokalen Voraussetzungen für die Inbetriebnahme des Links;
b) Empfangen einer Inbetriebnahme-Bereitschaftsnachricht oder einer Linkprüfungs-Anforderungsnachricht oder einer Linkbereitschaftsnachricht;
c) Senden einer weiteren Inbetriebnahme-Bereitschaftsnachricht sowie einer Linkprüfungs-Anforderungsnachricht und erneutes Empfangen einer Linkprüfungs-Anforderungsnachricht oder einer Linkbereitschaftsnachricht, falls eine Inbetriebnahme-Bereitschaftsnachricht empfangen wurde;
d) Senden einer Linkbereitschaftsnachricht und Inbetriebnahme des Links, falls eine Linkbereitschaftsnachricht empfangen wurde; anderenfalls
e) falls eine lokale Voreinstellung keine Linkprüfung erfordert: Senden einer Linkprüfungs-Anforderungsnachricht und einer Linkbereitschaftsnachricht und Inbetriebnahme des Links unmittelbar nach Empfang einer Linkbereitschaftsnachricht, falls eine Linkprüfungs-Anforderungsnachricht empfangen wurde, wobei die Linkprüfungs-Anforderungsnachricht in Schritt e) nicht gesendet wird, wenn diese bereits in Schritt c) gesendet wurde; anderenfalls
f) falls die lokale Voreinstellung eine Linkprüfung erfordert: Senden einer Linkprüfungs-Anforderungsnachricht und Durchführen der Linkprüfung mit anschließender Inbetriebnahme des Links, falls eine Linkprüfungs-Anforderungsnachricht empfangen wurde.

2. Verfahren nach Anspruch 1, demgemäß im Kommunikationsnetz Links gemäß dem Protokoll M2PA genutzt werden und wobei die Inbetriebnahme-Bereitschaftsnachricht eine Nachricht Link Status: Alignment LSA ist, die Linkprüfungs-Anforderungsnachricht eine Nachricht Link Status: Proving LSP ist und die Linkbereitschaftsnachricht eine Nachricht Link Status: Ready LSR ist.

3. Netzelement eines Kommunikationsnetzes, in welchem die Inbetriebnahme von Links mit und ohne Linkprüfung zulässig ist, das folgende Mittel zur Inbetriebnahme eines Links zu einem weiteren Netzelement aufweist:
a) Mittel zum Senden zumindest einer Inbetriebnahme-Bereitschaftsnachricht bei Vorliegen der lokalen Voraussetzungen für die Inbetriebnahme des Links;
b) Mittel zum Empfangen einer Inbetriebnahme-Bereitschaftsnachricht oder einer Linkprüfungs-Anforderungsnachricht oder einer Linkbereitschaftsnachricht;
c) Mittel zum Senden einer weiteren Inbetriebnahme-Bereitschaftsnachricht sowie einer Linkprüfungs-Anforderungsnachricht und erneutes Empfangen einer Linkprüfungs-Anforderungsnachricht oder einer Linkbereitschaftsnachricht, falls eine Inbetriebnahme-Bereitschaftsnachricht empfangen wurde;
d) Mittel zum Senden einer Linkbereitschaftsnachricht und Inbetriebnahme des Links, falls eine Linkbereitschaftsnachricht empfangen wurde; anderenfalls
e) Mittel zum Senden einer Linkprüfungs-Anforderungsnachricht und einer Linkbereitschaftsnachricht und Inbetriebnahme des Links unmittelbar nach Empfang einer Linkbereitschaftsnachricht, falls gemäß einer lokale Voreinstellung keine Linkprüfung erforderlich ist und falls eine Linkprüfungs-Anforderungsnachricht empfangen wurde, wobei die Mittel e) verhindern, daß eine Linkprüfungs-Anforderungsnachricht gesendet wird, wenn diese bereits durch die Mittel c) gesendet wurde; anderenfalls
f) Mittel Senden einer Linkprüfungs-Anforderungsnachricht und Durchführen der Linkprüfung mit anschließender Inbetriebnahme des Links, falls die lokale Voreinstellung eine Linkprüfung erfordert und falls eine Linkprüfungs-Anforderungsnachricht empfangen wurde.

4. Netzelement nach Anspruch 2, dessen Mittel a) bis f) zur Inbetriebnahme von Links gemäß dem Protokoll M2PA geeignet sind, wobei die Inbetriebnahme-Bereitschaftsnachricht eine Nachricht Link Status: Alignment LSA ist, die Linkprüfungs-Anforderungsnachricht eine Nachricht Link Status: Proving LSP ist und die Linkbereitschaftsnachricht eine Nachricht Link Status: Ready LSR ist.

## Claims

1. Method for activating a link between a local network element and a remote network element of a communication network, wherein the activation of links in the communication network is permitted with and without link proving and wherein the method executes with the following steps at least in the local network element:
a) sending of at least one activation ready message if the local preconditions for activating the link are met,
b) reception of an activation ready message or a link proving request message or a link ready message,
c) sending of a further activation ready message and a link proving request message and further reception of a link proving request message or a link ready message if an activation ready message has been received;
d) sending of a link ready message and activation of the link if a link ready message has been received; else
e) if a local default does not require link proving: sending of a link proving request message and a link ready message and activation of the link immediately after reception of a link ready message if a link proving request message has been received, the link proving request message not being sent in step e) if it was already sent in step c); else
f) if the local default requires link proving: sending of a link proving request message and performing of the link proving followed by activation of the link if a link proving request message has been received.

2. Method according to claim 1, wherein links according to the M2PA protocol are used in the communication network and wherein the activation ready message is a message Link Status:
Alignment LSA, the link proving request message is a message Link Status: Proving LSP, and the link ready message is a message Link Status: Ready LSR.

3. Network element of a communication network in which link activation is permitted with and without link proving, having the following means for activating a link to a further network element:
a) means for sending at least one activation ready message if the local preconditions for activating the link are met,
b) means for receiving an activation ready message or a link proving request message or a link ready message,
c) means for sending a further activation ready message and a link proving request message and further reception of a link proving request message or a link ready message if an activation ready message has been received,
d) means for sending a link ready message and activation of the link if a link ready message has been received,
e) means for sending a link proving request message and a link ready message and activation of the link immediately after reception of a link ready message if, according to a local default, link proving is not required and if a link proving request message has been received, the means e) preventing a link proving request message from being sent if such a message has already been sent by the means c); else
f) means for sending a link proving request message and performing the link proving followed by link activation if the local default requires link proving and if a link proving request message has been received.

4. Network element according to claim 2, comprising means a) to f) which are suitable for activating links according to the M2PA protocol, wherein the activation ready message is a message Link Status: Alignment LSA, the link proving request message is a message Link Status: Proving LSP, and the link ready message is a message Link Status: Ready LSR.

## Revendications

1. Procédé de mise en service d'une connexion entre un élément de réseau local et un élément de réseau distant d'un réseau de communication, la mise en service de connexions étant, dans le réseau de communication, autorisée avec et sans test de connexion et le procédé se déroulant avec les étapes suivantes, du moins dans l'élément de réseau local:
a) émission d'au moins un message de disponibilité à la mise en service en présence des conditions locales pour la mise en service de la connexion;
b) réception d'un message de disponibilité à la mise en service ou d'un message de demande de test de connexion ou d'un message de disponibilité de connexion;
c) émission d'un autre message de disponibilité à la mise en service ainsi que d'un message de demande de test de connexion et nouvelle réception d'un message de demande de test de connexion ou d'un message de disponibilité de connexion si un message de disponibilité à la mise en service a été reçu;
d) émission d'un message de disponibilité de connexion et mise en service de la connexion si un message de disponibilité de connexion a été reçu; dans le cas contraire,
e) si un préréglage local n'exige pas de test de connexion: émission d'un message de demande de test de connexion et d'un message de disponibilité de connexion et mise en service de la connexion directement après la réception d'un message de disponibilité de connexion si un message de demande de test de connexion a été reçu, le message de demande de test de connexion n'étant pas émis, à l'étape e), s'il a déjà été émis à l'étape c); dans le cas contraire, f) si le préréglage local exige un test de connexion: émission d'un message de demande de test de connexion et exécution du test de connexion, la connexion étant ensuite mise en service, si un message de demande de test de connexion a été reçu.

2. Procédé selon la revendication 1, selon lequel sont utilisées des connexions selon le protocole M2PA dans le réseau de communication et le message de disponibilité à la mise en service étant un message «Link Status: Alignment LSA», le message de demande de test de connexion, un message «Link Status: Proving LSP» et le message de disponibilité de connexion, un message «Link Status: Ready LSR».

3. Élément de réseau d'un réseau de communication, dans lequel la mise en service de connexions est autorisée avec et sans test de connexion, lequel comporte les moyens suivants pour la mise en service d'une connexion vers un autre élément de réseau:
a) des moyens pour émettre au moins un message de disponibilité à la mise en service en présence des conditions locales pour la mise en service de la connexion;
b) des moyens pour recevoir un message de disponibilité à la mise en service ou un message de demande de test de connexion ou d'un message de disponibilité de connexion;
c) des moyens pour émettre un autre message de disponibilité à la mise en service ainsi qu'un message de demande de test de connexion et recevoir nouvellement un message de demande de test de connexion ou un message de disponibilité de connexion si un message de disponibilité à la mise en service a été reçu;
d) des moyens pour émettre un message de disponibilité de connexion et mettre la connexion en service si un message de disponibilité de connexion a été reçu; dans le cas contraire,
e) des moyens pour émettre un message de demande de test de connexion et un message de disponibilité de connexion et mettre la connexion en service directement après la réception d'un message de disponibilité de connexion si, conformément à un préréglage local, un test de connexion n'est pas requis et si un message de demande de test de connexion a été reçu, les moyens e) empêchant l'émission d'un message de demande de test de connexion si celui-ci a déjà été émis par les moyens c); dans le cas contraire,
f) des moyens pour émettre un message de demande de test de connexion et exécuter le test de connexion, la connexion étant ensuite mise en service, si le préréglage local exige un test de connexion et si un message de demande de test de connexion a été reçu.

4. Élément de réseau selon la revendication 2, dont les moyens a) à f) sont appropriés pour la mise en service de connexions selon le protocole M2PA, le message de disponibilité à la mise en service étant un message «Link Status: Alignment LSA», le message de demande de test de connexion, un message «Link Status: Proving LSP» et le message de disponibilité de connexion, un message «Link Status: Ready LSR».
